# EUROPÄISCHE PATENTSCHRIFT

(11) **EP 4 025 470 B1**
(45) Veröffentlichungstag und Bekanntmachung des Hinweises auf die Patenterteilung: **08.04.2026**
(21) Anmeldenummer: 20751484.5
(22) Anmeldetag: 28.07.2020
(51) Int. Cl.: B60W 30/10

(54) **QUERFÜHRUNG EINES FAHRZEUGS MITTELS VON ANDEREN FAHRZEUGEN ERFASSTEN UMGEBUNGSDATEN**
LATERAL CONTROL OF A VEHICLE BY MEANS OF ENVIRONMENT DATA DETECTED FROM OTHER VEHICLES
COMMANDE LATÉRALE D'UN VÉHICULE À L'AIDE DE DONNÉES D'ENVIRONNEMENT DÉTECTÉES À PARTIR D'AUTRES VÉHICULES

(30) Priorität: 02.09.2019 DE 102019213185
(43) Veröffentlichungstag der Anmeldung: 13.07.2022
(73) Patentinhaber: VOLKSWAGEN AKTIENGESELLSCHAFT, 38440 Wolfsburg (DE)
(72) Erfinder: MÜNNING, Daniel, 38124 Braunschweig (DE); OSCHLIES, Hendrik, 38106 Braunschweig (DE)
(86) Internationale Anmeldenummer: PCT/EP2020/071260
(87) Internationale Veröffentlichungsnummer: WO 2021/043507

(56) Entgegenhaltungen:
- WO-A2-2018/229552
- DE-A1- 10 349 631
- DE-A1- 102016 215 643
- DE-A1- 102016 215 825
- DE-A1- 102017 221 932
- US-A1- 2018 025 235

## Beschreibung

Die Erfindung betrifft ein Verfahren und eine Anordnung zum Querführen eines Fahrzeugs, insbesondere eines Kraftfahrzeugs, wie z.B. einen Personenkraftwagen oder Lastkraftwagen.

In modernen Fahrzeugen und insbesondere Kraftfahrzeugen kommen verschiedene Fahrerassistenzsysteme zum Einsatz. Diese ermöglichen oftmals eine fahrerautonome Steuerung von z.B. Bewegungen des Fahrzeugs und/oder fahrerautonome Eingriffe in den Fahrzeugbetrieb, beispielsweise zum Anpassen einer Geschwindigkeit oder eines Lenkwinkels. Ein Beispiel ist ein sogenannter Spurhalteassistent. In an sich bekannter Weise wird dabei der Verlauf einer Fahrbahn (oder auch Fahrspur), der dem Fahrzeug vorausliegt, sensorisch erfasst. Anschließend wird sichergestellt, dass das Fahrzeug diese Fahrbahn nicht unbeabsichtigt verlässt, beispielsweise durch fahrerautonomes Gegenlenken bei Erreichen einer Fahrbahnbegrenzung.

Um derartige Funktionen bereitzustellen, wird die Umgebung des Fahrzeugs sensorisch erfasst. Dabei werden sogenannte Umgebungsdaten erhalten. Die Umgebungsdaten enthalten auswertbare oder ausgewertete Informationen zur Umgebung und insbesondere zu vorbestimmten Umgebungseigenschaften. Beispielsweise können sie den Verlauf und/oder die Koordinaten von Fahrbahnbegrenzungen entlang eines vorausliegenden Fahrbahnabschnitts angeben. Eine Möglichkeit zum Erfassen der Umgebungsdaten sind Kamerasensoren, bei denen die gewünschten Umgebungseigenschaften mittels einer Bildauswertung aus den erfassten Kamerabildern ermittelt werden können.

Ein typisches Anwendungsgebiet der hier geschilderten Fahrerassistenzfunktionen und/oder dem fahrerautonomen Steuern eines Fahrzeugs anhand von Umgebungsdaten ist die Querführung des Fahrzeugs. Hierunter kann z.B. verstanden werden, dass das Fahrzeug in Querrichtung (die allgemein horizontal sowie quer zu einer Fahrzeuglängsachse verläuft) in einer gewünschten Weise in Position gehalten und/oder geführt werden soll, insbesondere fahrerautonom. Beispielsweise kann ein zulässiger Bewegungskorridor in Querrichtung vorgegeben sein, der einer Breite der Fahrbahn entspricht. Im Rahmen der Querführung kann darauf geachtet werden, dass dieser (virtuelle) Bewegungskorridor nicht verlassen wird. Droht dies dennoch, kann im Rahmen der Querführung ein fahrerautonomer Lenkeingriff erfolgen. Lösungen und insbesondere Steuergeräte und ferner insbesondere Regler, die eine solche Querführung ermöglichen, sind am Markt erhältlich.

Das sensorische Erfassen der Umgebungsdaten kann jedoch in bestimmten Situationen nicht immer zuverlässig gelingen. Beispielsweise kann der Sensor ausfallen, verschmutzt sein oder anderweitige Fehlfunktionen aufweisen. Auch können die zu erfassenden Umgebungseigenschaften nicht immer erkennbar sein, beispielsweise wenn die Fahrbahn verschmutzt ist oder anderweitige Umgebungsbedingungen vorliegen, die anhand der Sensordaten nicht oder zumindest nicht richtig interpretiert werden können.

Aus der DE 10 2016 215 825 A1 ist ein Verfahren zum externen Bereitstellen von Kartendaten bekannt, die insbesondere mit Angaben zu Fahrbegrenzungseigenschaften präzisiert sind, wobei das Verfahren für einen aus einer Vielzahl von Fahrstreckenabschnitten ausgewählten Fahrstreckenabschnitt mit folgenden Schritten durchgeführt wird:
- Identifizieren von dem ausgewählten Fahrstreckenabschnitt zugeordneten statischen und dynamischen Objekten aus empfangenen Umgebungsdaten von mindestens einem Meldefahrzeug, sodass für jedes identifizierte statische und dynamische Objekt ein seitlicher Abstand zu einer Längsachse des die zugeordneten Umgebungsdaten erfassenden Meldefahrzeugs bestimmt ist,
- Bestimmen einer Fahrbahnbegrenzungseigenschaft des ausgewählten Fahrstreckenabschnitts abhängig von den seitlichen Abständen der identifizierten statischen und dynamischen Objekte in dem ausgewählten Fahrstreckenabschnitt und
- Bereitstellen der mit der Fahrbahnbegrenzungseigenschaft aktualisierten Kartendaten nach extern.

Ein ähnliches Verfahren, aus Schwarmdaten von Meldefahrzeugen eine digitale Karte aufzubauen, ist aus der US 2018/0025235 A1 bekannt.

Es besteht somit ein Bedarf dafür, die Querführung von Fahrzeugen zu verbessern, insbesondere in Hinblick auf eine nicht immer zuverlässige sensorische Umgebungserfassung. Diese Aufgabe wird mit einem Verfahren und einer Anordnung gemäß den beigefügten unabhängigen Ansprüchen gelöst. Vorteilhafte Weiterbildungen sind in den abhängigen Ansprüchen angegeben. Es versteht sich, dass sämtliche der einleitenden Merkmale und Ausführungen auch bei der vorliegenden Lösung vorgesehen sein bzw. auf diese zutreffen können.

Prinzipiell sieht die erfindungsgemäße Lösung (also das erfindungsgemäße Verfahren und die erfindungsgemäße Anordnung) vor, sich für die Querführung nicht lediglich auf sensorisch erfasste Daten zu beschränken. Stattdessen sollen auch Daten von anderen Fahrzeugen berücksichtigt werden, die dieselbe Strecke in der Vergangenheit bereits befahren haben. Insbesondere kann auf sogenannte Schwarmdaten zurückgegriffen werden, welche Daten einer Vielzahl von Fahrzeugen über einen längeren Zeitraum enthalten und speichern. Diese gespeicherten Daten (vor allem Umgebungsdaten) dienen als eine Art Referenz, da sie angeben, in welcher Form die Umgebung entlang einer aktuellen Strecke durch andere Fahrzeuge bereits erfasst wurde. Insofern werden eigene Sensordaten des Fahrzeugs und insbesondere Umgebungsdaten mit den gespeicherten Umgebungsdaten verglichen.

Erfindungsgemäß werden die gespeicherten Daten anhand der eigenen erfassten Sensordaten plausibilisiert oder, mit anderen Worten, verifiziert. Erfindungsgemäß werden die bereits gespeicherten Umgebungsdaten, sofern plausibilisiert, zusätzlich oder alternativ zu den vom Fahrzeug erfassten Umgebungsdaten für das (fahrerautonome) Querführen des Fahrzeugs verwendet. Falls die Plausibilisierung misslingt und z.B. die gespeicherten Umgebungsdaten deutlich von den sensorisch erfassten Umgebungsdaten abweichen, wird hingegen auf eine Berücksichtigung dieser gespeicherten Umgebungsdaten für die (fahrerautonome) Querführung verzichtet. Stattdessen werden dann die eigenen Sensordaten des Fahrzeugs verwendet, z. B. um auf kurzfristige Umgebungs-änderungen zu reagieren.

Ein Vorteil ist, dass die Vielzahl von bereits erfassten Umgebungsdaten, die erwartungsgemäß eine hohe und/oder bereits verifizierte Genauigkeit besitzen, standardgemäß für eine Querführung des Fahrzeugs verwendet werden können (sofern plausibel). Diese können gegenüber den gegebenenfalls fehleranfälligen und weniger genauen sensorischen Erfassungen des eigenen Fahrzeugs priorisiert sein. Andererseits kann auf kurzfristige Änderungen in der Fahrzeugumgebung, die von den Fahrzeugen, die vormals die Strecke bereits befahren haben, noch nicht erfasst wurden, reagiert werden, da dann auf die Umgebungsdaten gewechselt werden kann, die vom aktuell die Strecke befahrenden Fahrzeug erfasst werden. Eine solche Diskrepanz der gespeicherten und erfassten Umgebungsdaten kann zu einem Misslingen der Plausibilisierung führen, woraufhin dann erfindungsgemäß die vom Fahrzeug erfassten eigenen Umgebungsdaten standardgemäß ausgewählt werden.

Insgesamt wird eine Lösung bereitgestellt, bei der mit einer erhöhten Wahrscheinlichkeit die genaueren oder auch weniger fehleranfälligen Umgebungsdaten für die Querführung automatisch ausgewählt werden, was die Betriebssicherheit des Fahrzeugs erhöht.

Im Detail wird ein Verfahren zum Querführen eines Fahrzeugs vorgeschlagen, mit den Merkmalen des Anspruchs 1.

Die Umgebungsdaten können insbesondere Daten betreffend eine Fahrbahnumgebung und insbesondere einen vorausliegenden Fahrbahnabschnitt betreffen. Sie können nachstehend erläuterte Umgebungseigenschaften angeben und/oder beziffern. Das Erfassen erfolgt fahrerautonom, mittels Erfassungssensoren. Insbesondere können als Erfassungssensoren eine Kamera, ein Ultraschallsensor, ein Lidarsensor oder dergleichen verwendet werden.

Jegliche hierin geschilderten Umgebungsdaten können mit Ortsinformationen versehen sein. Somit kann auf den Ort geschlossen werden, an dem die entsprechenden Umgebungsinformationen bzw. Umgebungsdaten ermittelt wurden. Die Daten können digitale Datensätze sein und/oder in elektrischen oder digitalen Speichereinrichtungen hinterlegt werden.

Umgebungsdaten können Ausgabedaten von Sensoren zur Umgebungserfassung sein oder anhand derartiger Ausgabedaten (oder auch Ausgabesignalen) ermittelt werden. Beispielsweise können die Umgebungsdaten Daten zu vorbestimmten Umgebungseigenschaften sein, wobei diese Umgebungseigenschaften aus Bilddaten (als Ausgabedaten) eines Kamerasensors ermittelt werden. Diese Ermittlung kann allgemein von einem Steuergerät oder Steuereinrichtung des Fahrzeugs durchgeführt werden, wie auch die Speicherung der erfassten Umgebungsdaten. Prinzipiell können jegliche hierin geschilderten Verfahrensschritte oder Verfahrensmaßnahmen von einer Steuereinrichtung des Fahrzeugs durchgeführt werden, wie nachstehend noch näher erläutert werden wird.

Die gespeicherten Umgebungsdaten können in einer Speichereinrichtung des Fahrzeugs gespeichert sein. Beispielsweise kann es sich um einen Navigationsspeicher handeln oder, mit anderen Worten, den Speicher eines Navigationsgeräts. Zusätzlich oder alternativ können die Umgebungsdaten in einer fahrzeugexternen Speichereinrichtung gespeichert werden, beispielsweise auf einem Server (insbesondere einem Cloud-Server). Das Fahrzeug kann dann selektiv bzw. bedarfsweise auf diesen Server zugreifen und die für eine aktuell gefahrene, geplante oder wahrscheinliche Strecke relevanten Umgebungsdaten anfordern. Eine Kommunikationsverbindung zu der fahrzeugexternen Speichereinrichtung und insbesondere dem Server kann allgemein nicht-kabelgebunden sein. Insbesondere kann es sich um eine Mobilfunkverbindung oder eine Internetverbindung handeln. Zumindest ein Teil der fahrzeugextern gespeicherten Umgebungsdaten kann in dem Fahrzeug zwischengespeichert werden. Bei diesem Teil kann es sich um die eine aktuell befahrene, geplante oder wahrscheinliche Strecke betreffenden Umgebungsdaten handeln.

Die gespeicherten Umgebungsdaten können bereits zumindest teilweise vorausgewertet sein. Beispielsweise kann es sich um einen Mittelwert für eine vorbestimmte Umgebungseigenschaft handeln, der aus sämtlichen gespeicherten Umgebungsdaten, die von einzelnen Fahrzeugen übermittelt wurden, ermittelt wird. Eine solche Auswertung von Erwartungswerten und/oder Mittelwerten zu vorbestimmten Umgebungseigenschaften auf Basis der insgesamt gespeicherten oder, mit anderen Worten, gesammelten oder angehäuften Umgebungsdaten kann prinzipiell auch im Fahrzeug selbst erfolgen. Eine Umgebungseigenschaft können die Koordinaten von vorbestimmten Umgebungsmerkmalen sein, wie z. B. eine Mittellinie oder Fahrbahnbegrenzung.

Es können also Rohdaten und/oder bereits ausgewertete Daten als Umgebungsdaten gespeichert werden.

Die Fahrzeuge, die die gespeicherten Umgebungsdaten erfasst und geliefert haben, können die Strecke aktuell nicht befahren. Vielmehr kann es sich um eine Fahrzeugflotte oder Fahrzeugpopulation handeln, welche die Strecke in der Vergangenheit bereits befahren hat. Dies kann insbesondere über einen längeren Zeitraum von mehreren Tagen, Wochen oder Monaten erfolgen. Es wird somit eine Sammlung von über einen längeren Zeitraum erfassten Umgebungsdaten einer Vielzahl von Fahrzeugen erzeugt, welche als eine Art Wissensbasis oder Wissensdatenbank für die Umgebungserfassung dient. Dies unterscheidet sich von Lösungen, bei denen sensorisch erfasste Daten ausschließlich zwischen Fahrzeugen ausgetauscht werden, welche sich aktuell in derselben Umgebung befinden und eine gemeinsame Strecke befahren. Ein solcher Datenaustausch in Echtzeit setzt voraus, dass sich auch tatsächlich ein weiteres Fahrzeug in der Umgebung befindet. Ist dies nicht der Fall, kann keine Verbesserung der Fahrsicherheit erzielt werden. Zudem kann auch das Problem auftreten, dass dieses weitere Fahrzeug unter denselben Umgebungsproblemen bei der sensorischen Erfassung leidet, wie das eigene Fahrzeug, beispielsweise aufgrund von starkem Schneefall oder einer verschmutzten Straße. Somit ist nicht immer gewährleistet, dass selbst dann, wenn sich ein weiteres Fahrzeug in der Umgebung befindet, die hiervon erfassten Umgebungsdaten qualitativ besser als die eigens erfassten Umgebungsdaten sind.

Es ist aber auch möglich, z. B. zusätzlich zu gespeicherten Umgebungsdaten Umgebungsdaten von anderen Fahrzeugen zu berücksichtigen, die dieselbe Strecke aktuell ebenfalls befahren.

Das Plausibilisieren der gespeicherten Umgebungsdaten anhand der erfassten Umgebungsdaten kann einen Vergleich dieser Daten miteinander umfassen. Insbesondere kann wenigstens eine Umgebungseigenschaft dieser Umgebungsdaten miteinander verglichen werden.

Wird hierin von Umgebungsdaten im Plural gesprochen, bedeutet dies nicht, dass zwingend eine Mehrzahl von Umgebungseigenschaften erfasst werden muss. Es kann auch lediglich eine Umgebungseigenschaft erfasst werden, die aber ortsabhängig und/oder entlang einer vorausliegenden Strecke kontinuierlich erfasst wird. Da somit beim Befahren der Strecke diese ortsabhängige Umgebungseigenschaft mehrfach aktualisiert wird, wird beim Befahren der Strecke auch eine entsprechende Mehrzahl von einzelnen Umgebungsdaten erhalten (z.B. je betrachteten Ort oder vorausliegenden Streckenabschnitt Daten zu einer dort vorliegenden Umgebungseigenschaft).

Insbesondere kann beim Plausibilisieren eine Abweichung der gespeicherten Umgebungsdaten mit den erfassten Umgebungsdaten ermittelt werden. Je größer die Abweichung, desto eher werden die gespeicherten Umgebungsdaten nicht als plausibel bewertet. Insbesondere kann ein maximal zulässiger Abweichungsschwellenwert definiert sein, der für eine Plausibilisierung nicht überschritten werden darf. Wie nachstehend noch näher erläutert, können Vergleiche und/oder Abweichungen anhand von quantifizierten Größen erfolgen, die in den Umgebungsdaten beschrieben sind aber von diesen beschrieben werden, wobei es sich insbesondere um die bereits erwähnten Umgebungseigenschaften handeln kann.

Die Querführung des Fahrzeugs kann allgemein fahrerautonom erfolgen. Insbesondere kann hierfür die vorstehend erwähnte Führung innerhalb eines zulässigen Bewegungskorridors erfolgen, samt etwaiger fahrerautonomer Lenkeingriffe. Es können bekannte Regelungsalgorithmen eingesetzt werden, um anhand aktueller Bewegungsgrößen eine unzulässige Querbewegung des Fahrzeugs zu ermitteln und darauf basierend gegebenenfalls (fahrerautonome) Gegenmaßnahmen einzuleiten. Das Durchführen der Querführung basierend auf den plausibilisierten Umgebungsdaten (oder, im nachstehenden Fall, basierend auf den vom Fahrzeug erfassten Umgebungsdaten) kann umfassen, dass anhand der Umgebungsdaten ein zulässiger Bewegungskorridor definiert wird und/oder wenigstens eine nicht zu überschreitende Grenze in Querrichtung. Beispielsweise können anhand der Umgebungsdaten Fahrbahnmarkierungen oder Fahrbahnbegrenzungen ermittelt werden und diese können eine maximal zulässige Position in Querrichtung für das Fahrzeug definieren. Entsprechend kann im Rahmen der Querführung überwacht werden, ob das Fahrzeug droht, diese Grenze zu überschreiten, und kann dann z.B. fahrerautonom gegengelenkt werden.

Eine Weiterbildung sieht vor, dass die gespeicherten Umgebungsdaten Schwarmdaten sind. Unter Schwarmdaten können Daten verstanden werden, die von einer Vielzahl von Fahrzeugen (z.B. mehr als 10 oder mehr als 100) über einen Zeitraum von einer Mehrzahl von Tagen (z.B. wenigstens 10, wenigstens 30 oder wenigstens 365) oder über eine Mehrzahl von Fahrten entlang der Strecke erfasst wurden. Die Vielzahl dieser Fahrzeuge können unabhängig voneinander agieren, aber dennoch zusammenfassend als Flotte oder Schwarm bezeichnet werden. Die von den Fahrzeugen der Flotte oder des Schwarms jeweils individuell erfassten Umgebungsdaten können zusammengefasst, also insgesamt, als Schwarmdaten bezeichnet und bevorzugt entsprechend zusammengefasst und/oder gemeinsam beispielsweise in einer zentralen Datenbank gespeichert werden. Gemeinsames Merkmal der Fahrzeuge ist, dass sie dieselbe Strecke befahren haben, was anhand von Ortsinformationen der Umgebungsdaten ermittelt werden kann. Innerhalb der Schwarmdaten liegen also für eine Vielzahl von Fahrten entlang der Strecke Umgebungsdaten vor. Vorzugsweise haben die Fahrzeuge dabei Umgebungsdaten zu bevorzugt gemeinsamen vorbestimmten Umgebungseigenschaften ermittelt. Auch die Schwarmdaten können fahrzeugextern gespeichert werden, z.B. auf vorstehend erläuterten Servern.

Erfindungsgemäß ist vorgesehen, dass dann, wenn das Plausibilisieren misslingt (beispielsweise da eine Güte der erfassten Umgebungsdaten eine erforderliche Mindestgüte nicht erfüllt) die vom Fahrzeug erfassten Umgebungsdaten als Umgebungsdaten für die Querführung verwendet oder, mit anderen Worten, berücksichtigt werden.

Allgemein ist darauf hinzuweisen, dass unter einem Plausibilisieren im Rahmen dieser Offenbarung verstanden werden kann, dass eine Qualität der Umgebungsdaten und/oder deren Aussagekraft, Berücksichtigungsfähigkeit, Genauigkeit oder allgemeine Verwendbarkeit ermittelt und bestätigt wird. Hierfür können im Rahmen dieser Erfindung die erfassten Umgebungsdaten als Referenz dienen.

Misslingt das Plausibilisieren der gespeicherten Umgebungsdaten, kann dies darauf hindeuten, dass sich entlang der Fahrstrecke z.B. kurzfristige Änderungen ergeben haben. Dann wird aus Sicherheitsgründen auf die vom Fahrzeug erfassten Umgebungsdaten gewechselt.

Gemäß einer weiteren Ausführungsform betreffen die Umgebungsdaten unterschiedliche Umgebungseigenschaften und für jede Umgebungseigenschaft wird eine eigenständige Plausibilisierung durchgeführt. In der Folge kann die Querführung des Fahrzeugs auf den plausibilisierten Umgebungseigenschaften durchgeführt werden. Diejenigen Umgebungseigenschaften, die nicht plausibilisiert wurden, können hingegen vom Fahrzeug erfasst werden, sodass auch Mischformen von gespeicherten Umgebungseigenschaften und erfassten Umgebungseigenschaften, je nach Plausibilisierungsergebnis, für die Fahrzeug-Querführung verwendet werden können. Dies erhöht die Sicherheit und Genauigkeit, da für jede Eigenschaft gesondert überprüft wird, ob diese tatsächlich einen aktuellen Zustand widerspiegelt.

Allgemein kann vorgesehen sein, dass eine Umgebungseigenschaft, die mit den Umgebungsdaten erfasst oder daraus ermittelt wird, eine der folgenden ist:
- eine aus Sicht des Fahrzeugs (d.h. in Fahrtrichtung) linke Fahrbahnmarkierung oder Fahrbahnbegrenzung;
- eine aus Sicht des Fahrzeugs rechte Fahrbahnmarkierung oder Fahrbahnbegrenzung;
- wenigstens eine äußere Fahrbahnkante.

Unter einer Fahrbahn kann hierin auch lediglich eine einzelne Fahrspur von einer mehrspurigen Straße oder einem mehrspurigen Fahrweg verstanden werden. Eine Fahrbahnmarkierung kann entsprechend eine Fahrspurmarkierung sein. Allgemein kann es sich bei einer Fahrbahnmarkierung um einen Mittelstrich oder Seitenstrich handeln, die in an sich üblicher Weise auf die Fahrbahnoberfläche aufgetragen sein können. Die Fahrbahnbegrenzung kann ein physisches Hindernis sein, das ein Verlassen der Fahrbahn zumindest lokal verhindern kann oder aber ein Kollisionshindernis für das Verlassen der Fahrbahn darstellen kann, z. B. in Form eines Pollers, eines Leitpfostens oder einer Leitplanke.

Eine äußere Fahrbahnkante kann einer Straßenkante entsprechen und/oder einem Übergangsbereich zur z. B. nicht asphaltierten Umgebung.

Eine Weiterbildung sieht vor, dass auch Informationen über eine von den weiteren Fahrzeugen gefahrene Route gespeichert werden. Diese Informationen werden bevorzugt zwecks Plausibilisierens der gespeicherten Umgebungsdaten mit vom Fahrzeug erfassten Umgebungsdaten verwendet. Beispielsweise können nur Umgebungsdaten von denjenigen Fahrzeugen betrachtet werden, welche entlang einer selben oder aber vergleichbaren Route (oder auch Strecke) gefahren sind. Beispielsweise kann überprüft werden, ob eine von den Fahrzeugen gefahrene Route mit einer laut vom (eigenen) Fahrzeug erfassten Umgebungsdaten tatsächlich vorausliegenden Route bzw. Fahrbahnverlauf übereinstimmt. Ist dies nicht der Fall, können die Umgebungsdaten dieser entsprechenden Fahrzeuge unberücksichtigt bleiben oder, genauer gesagt, können die von diesen Fahrzeugen erfassten Umgebungsdaten nicht plausibilisiert werden.

Die Routeninformationen können in Form von Ortskoordinaten und/oder GPS-Daten oder anderen Positionsermittlungsdaten gespeichert werden oder anhand dieser definiert sein.

Gemäß einer weiteren Ausführungsform wird für das Plausibilisieren eine Güte der gespeicherten Umgebungsdaten anhand der erfassten Umgebungsdaten ermittelt. Insbesondere kann ermittelt werden, inwieweit die Umgebungsdaten mit den erfassten Umgebungsdaten übereinstimmen und/oder hiervon abweichen. In Abhängigkeit davon kann dann die Güte der gespeicherten Umgebungsdaten ermittelt werden. Je größer die Übereinstimmung bzw. je kleiner die Abweichung, desto höher kann die Güte sein. Insbesondere kann ein quantifizierbarer Wert als Güte oder, anders ausgedrückt, Gütekriterium ermittelt werden. Wie nachstehend erläutert, kann dieser mit einer Mindestgüte verglichen werden, die ebenfalls als ein quantifizierbarer Wert definiert sein kann, und können nur dann die Umgebungsdaten plausibilisiert werden, wenn die Mindestgüte erfüllt ist.

Insbesondere kann in diesem Zusammenhang vorgesehen sein, dass die Güte anhand eines Vergleichs aus den gespeicherten Umgebungsdaten und den erfassten Umgebungsdaten über (d. h. entlang) einen definierten und bevorzugt vorausliegenden Streckenabschnitt ermittelt wird. Ortsinformationen für den vorausliegenden Streckenabschnitt können aus einer aktuell erfassten Position des Fahrzeugs und bekannten Erfassungsbereichen der Fahrzeugsensoren ermittelt werden. So ist es beispielsweise im Rahmen dieser Erfindung allgemein möglich, einen betrachteten vorausliegenden Fahrbahnabschnitt zu bestimmen, beispielsweise ob die erfassten Umgebungsdaten innerhalb eines Bereiches von 0 bis 20 m, 0 bis 40 m oder 0 bis 60 m (in Fahrtrichtung) vor dem Fahrzeug erfasst werden. Aus den gespeicherten Umgebungsdaten können dann Umgebungsdaten mit identischen Ortsinformationen ermittelt werden und können diese entlang der vorausliegenden Fahrstrecke und insbesondere innerhalb eines definierten vorausliegenden Streckenabschnitts von z.B. 0 bis 20 m oder 0 bis 40 m mit den erfassten (vorausliegenden) Umgebungsdaten verglichen werden. Dies stellt ein effektives Mittel dar, um rechtzeitig unzulässige Abweichungen der gespeicherten und erfassten Umgebungsdaten festzustellen.

Die Erfindung kann weiter vorsehen, dass eine Mindestgüte ermittelt wird, die die gespeicherten Umgebungsdaten erfüllen müssen, damit sie als plausibel gelten bzw. als plausibel bewertet werden. Dabei kann die Mindestgüte in Abhängigkeit von wenigstens einem der folgenden (und, genauer gesagt, in Abhängigkeit von einer der folgenden Größen) ermittelt werden:
- Eine dem Fahrzeug vorausliegende Streckenabschnittslänge, innerhalb derer erfasste Umgebungsdaten mit gespeicherten Umgebungsdaten verglichen werden. Dabei kann z.B. berücksichtigt werden, ob ein vorausliegender Erfassungsbereich für Umgebungsdaten 0 bis 20 m, 0 bis 40 m oder 0 bis 60 m beträgt. Je größer der vorausliegende Streckenabschnitt bzw. die betrachtete vorausliegende Streckenlänge, desto geringere Anforderungen können an die Mindestgüte gestellt werden. Dem liegt der Gedanke zugrunde, dass Erfassungen in weit vorausliegenden bzw. weit vom Fahrzeug entfernten Bereichen allgemein weniger genau ausfallen können als in fahrzeugnäheren Bereichen. Je geringer also die genannte Streckenabschnittsgröße bzw. -länge, desto höhere Anforderungen können an die zu erfüllende Mindestgüte gestellt werden. Allgemein kann die Mindestgüte eine zu erfüllende Mindestübereinstimmung oder aber eine zulässige maximale Abweichung von den gespeicherten und erfassten Umgebungsdaten definieren und insbesondere quantifizieren. Hohe Anforderungen an die Mindestgüte können gleichbedeutend mit geringen zulässigen Abweichungen oder auch einer hohen geforderten Übereinstimmung sein. Geringe Anforderungen an die Mindestgüte können gleichbedeutend mit einer hohen zulässigen Abweichung und einer geringen Übereinstimmung sein.
- Eine Art der Umgebungseigenschaft, die als (oder im Rahmen der) Umgebungsdaten erfasst und verglichen werden. Hierbei kann darauf Rücksicht genommen werden, mit welcher Genauigkeit die entsprechenden Eigenschaften überhaupt erfassbar sind. Beispielsweise kann die Erfassung von Fahrbahnbegrenzungen oder Fahrbahnmarkierungen leichter sein als die einer Fahrbahnkante (z.B. der Übergang von Asphalt zu Natur). Je höher eine theoretisch erfassbare Genauigkeit der Umgebungseigenschaft, desto höher können die Anforderungen an die zu erfüllende Mindestgüte ausfallen. Je geringer diese Genauigkeit ist, desto geringer können die Anforderungen an die Mindestgüte ausfallen.
- Die Erfassungsbedingungen während dem Erfassen der Umgebungsdaten, wobei insbesondere auf die vom Fahrzeug erfassten Umgebungsdaten abgestellt werden kann. Die Erfassungsbedingungen können von Fahrzeugsensoren ermittelt werden. Es kann sich beispielsweise um eine Helligkeit, ein Niederschlagsniveau, eine Sichtweite, um allgemeine Sichtbedingungen oder aber um eine Fahrbahnverschmutzung handeln. Die Erfassungsbedingungen können als Bestandteil der Umgebungsdaten und/oder als Zusatzinformationen abgespeichert werden. Sind die Erfassungsbedingungen als kritisch einzustufen, d.h. ermöglichen keine hochgenaue Umgebungserfassung, was automatisch von einem Steuergerät des Fahrzeugs ermittelt und/oder entsprechend bewertet werden kann, können entsprechend niedrige Anforderungen an die Mindestgüte gelten. Im Gegenteil können die Anforderungen an die Mindestgüte erhöht werden, wenn die Erfassungsbedingungen unkritisch sind.
- Eine Region, innerhalb derer sich das Fahrzeug befindet. Hierbei kann es sich um eine geografische Region handeln, die z.B. anhand von geografischen Eigenschaften und/oder Kartendaten definiert ist. Es kann sich aber auch um einen Umkreis mit einer vorbestimmten Kilometerzahl handeln. Es kann für diese Region ermittelt werden, in welchem Ausmaß gespeicherte Umgebungsdaten hierfür vorliegen und/oder welche Güte die Umgebungsdaten in dieser Region (historisch) besessen haben. Zeichnet sich die Region durch eine geringe Anzahl von gespeicherten Umgebungsdaten und/oder eine geringe Güte dieser Umgebungsdaten aus, können die Anforderungen an die zu erfüllende Mindestgüte entsprechend gering ausfallen, da allgemein von einer hohen Erfassungsunsicherheit auszugehen ist. Im Gegenteil können bei einer Vielzahl von gespeicherten Umgebungsdaten und/oder einer hohen Güte in dieser Region die Anforderungen an die Mindestgüte erhöht werden.
- Einer historischen Güte der gespeicherten Umgebungsdaten. Hierbei können unabhängig von einem Zusammenhang zu bestimmten Regionen und z.B. bezogen auf das aktuell betrachtete Fahrzeug und/oder die Fahrstrecke vormals ermittelte Güten der Umgebungsdaten betrachtet werden. Sind diese vergleichsweise hoch, können die Anforderungen an die Mindestgüte erhöht und andernfalls reduziert werden.
- Einer Eigenschaft des zur Güteermittlung durchgeführten Vergleichs. Hier kann beispielsweise eine allgemein erwartete Genauigkeit des verwendeten Vergleichsverfahrens und/oder einer hierbei festgestellten (z.B. statistischen) Genauigkeitsgröße betrachtet werden. Allgemein können bei weniger präzisen oder fehlanfälligen Verfahren die Anforderungen an die Mindestgüte verringert werden. Beispielsweise können bei einem Vergleich auf Basis kleinster Fehlerquadrate andere (insbesondere geringere) Anforderungen an die zu erfüllende Mindestgüte gelten als bei einer allgemeinen Betrachtung der Korrelation zwischen gespeicherten und erfassten Umgebungsdaten. Mit der Methode kleinster Fehlerquadrate kann eine konstante Abweichung der Daten (z.B. ein Parallelversatz erfasster und gespeicherter Fahrbahnverläufe) bekanntermaßen zu hohen Abweichungen führen, was als wenig genau bewertet werden kann. Die Korrelation kann von einer solchen konstanten Abweichung weniger stark beeinflusst werden und daher bevorzugt mit höheren Anforderungen an die Mindestgüte einhergehen. Ein weiteres Beispiel eines Vergleichsverfahrens ist das Ermitteln der Hausdorffdistanz, bei der wie bei der Korrelation hohe Mindestgüte-Anforderungen gelten können.

Je nach Anzahl der betrachteten Größen kann die Mindestgüte ein mehrdimensionales Kennfeld sein bzw. anhand eines solchen ermittelt werden, wobei die Dimension bspw. durch die Anzahl der Größen bestimmt wird. Die Größen können gewichtet oder gewichtbar sein. Die Gewichtung kann flexibel anpassbar sein. Auf diese Weise kann eine Mindestgüte z.B. anhand einer Linearkombination von ggf. gewichteten Einzelwerten ermittelt werden, wobei ein Einzelwerte jeweils als und/oder auf Basis einer einzelnen Größen ermittelt wird. Der Einzelwert kann ein Skalenwert sein, der in Abhängigkeit aktueller Werte einer entsprechenden Größe erhalten wird (z.B. eine Bewertungsskala der historischen Güte von 0 (unbrauchbar) bis 10 (sehr gut)).

Allgemein kann auch vorgesehen sein, dass gespeicherte Umgebungsdaten nur begrenzt als gültig angesehen werden. Bei Überschreiten eines maximal zulässigen Alters können diese bevorzugt ohne Berücksichtigung weiterer (bspw. Güte-) Eigenschaften sozusagen automatisch als nicht plausibel bewertet werden.

Die Erfindung betrifft auch eine Anordnung zum Querführen eines Fahrzeugs, mit den Merkmalen vom Anspruch 9.

Bei der Erfassungseinrichtung kann es sich um eine Sensoreinrichtung bzw. einen Sensor gemäß jeglicher hierin geschilderter und allgemein in einem Fahrzeug vorgesehener Varianten handeln, mit denen Umgebungsdaten erfassbar sind.

Die Steuereinrichtung kann verteilt im Fahrzeug angeordnet sein und z.B. mehrere einzelne Steuerkomponenten und/oder Steuergeräte umfassen oder auf diese zugreifen. Es kann sich aber auch um ein einzelnes baulich und/oder funktional integriertes Steuergerät des Fahrzeugs handeln. Das Zugreifen auf Umgebungsdaten kann durch Zugreifen auf einen Fahrzeugbus erfolgen, der mit der Steuereinrichtung und der Erfassungseinrichtung verbunden ist. Die erfassten Umgebungsdaten können von der Steuereinrichtung und/oder der Erfassungseinrichtung verarbeitet werden, beispielsweise um die hierin geschilderten zu erfassenden Umgebungseigenschaften zu bestimmen. Um auf die gespeicherten Umgebungsdaten zuzugreifen, kann die Steuereinrichtung auf eine fahrzeugexterne Speichereinrichtung zugreifen (bspw. per Mobilfunkverbindung) oder kann diese Umgebungsdaten aus einem (Zwischen-)Speicher des Fahrzeugs auslesen, beispielsweise wenn diese nach einem Auslesen aus einem fahrzeugexternen Speicher im Fahrzeug zwischengespeichert werden. Die Steuereinrichtung kann also allgemein dazu eingerichtet sein, die gespeicherten Umgebungsdaten auszulesen, anzufragen und/oder zu erhalten, insbesondere von einer bzw. aus einer fahrzeugexternen Speichereinrichtung. Zum Plausibilisieren dieser gespeicherten Umgebungsdaten kann z.B. ein Vergleich jeglicher der vorstehend erläuterten Art durchgeführt werden und/oder kann eine Güte dieser gespeicherten Umgebungsdaten, bevorzugt auch eine zu erfüllende Mindestgüte, von der Steuereinrichtung ermittelt werden.

Zum Durchführen der Querführung des Fahrzeugs kann die Steuereinrichtung bekannte Regelfunktionen bereitstellen und insbesondere die Umgebungsdaten zum Festlegen nicht zu überschreitender Querpositionen und/oder zum Definieren eines zulässigen (virtuellen) Bewegungskorridors verwenden. Weiter kann die Steuereinrichtung aktuelle Querpositionen des Fahrzeugs mit einem entsprechenden Bewegungskorridor oder einer allgemeinen Bewegungsgrenze vergleichen und dann, wenn ein Verlassen dieses Korridors oder Überschreiten dieser Grenze droht, fahrerautonome Gegenmaßnahmen einleiten, insbesondere fahrerautonome Lenkeingriffe.

Allgemein kann die Anordnung jegliches weitere Merkmal und jegliche weitere Komponente umfassen, um sämtliche der hierin geschilderten Funktionen, Betriebszustände, Defekte, Schritte und Maßnahmen bereitzustellen und/oder auszuführen. Allgemein kann die Anordnung dazu eingerichtet sein, ein Verfahren gemäß jeglicher der hierin geschilderten Art auszuführen. Insbesondere können sämtliche Weiterbildungen von und Ausführungen zu den Verfahrensmerkmalen auch auf die gleichlautenden Anordnungsmerkmale zutreffen bzw. bei diesen vorgesehen sein.

Die Erfindung wird im Folgenden anhand der beigefügten schematischen Figuren erläutert:
- Fig. 1: zeigt ein Fahrzeug, das eine Anordnung gemäß einem Ausführungsbeispiel der Erfindung umfasst, wobei die Anordnung ein Verfahren gemäß einem Ausführungsbeispiel ausführt; und
- Fig. 2: zeigt ein Ablaufschema des Verfahrens, das von der Anordnung aus Fig. 1 ausgeführt wird.

Im Folgenden können für gleichartige oder gleichwirkende Merkmale figurenübergreifend die gleichen Bezugszeichen verwendet werden.

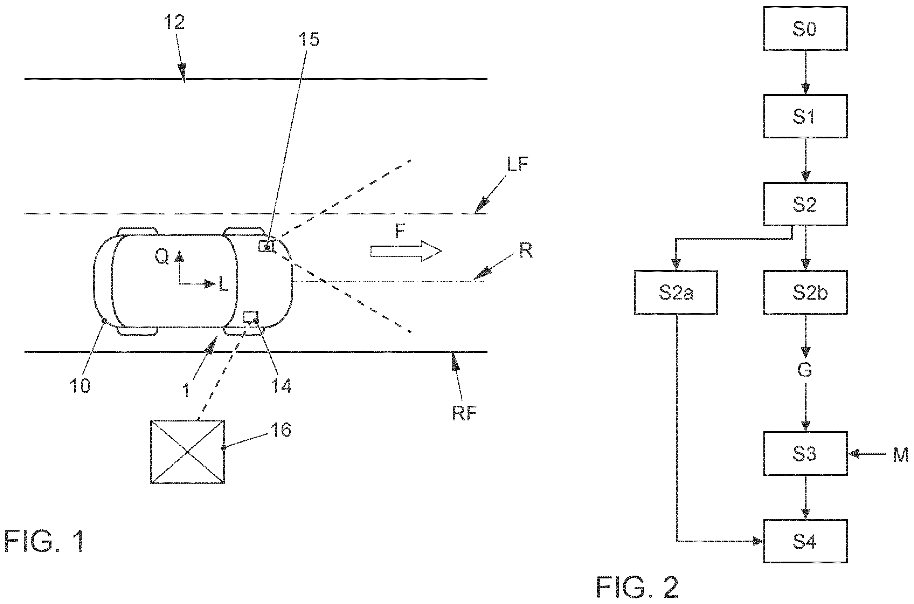

In Fig. 1 ist ein Fahrzeug 10 gezeigt, das entlang einer Straße 12 (oder auch Strecke) in die Fahrtrichtung F fährt. Das Fahrzeug 10 umfasst eine Anordnung 1 gemäß einem Ausführungsbeispiel der Erfindung. Die Anordnung 1 umfasst eine Steuereinrichtung 14, die in dem gezeigten Beispiel als ein einzelnes Steuergerät ausgebildet ist. Das Steuergerät 14 ist über eine Mobilfunkverbindung kabellos mit einem fahrzeugexternen Server und genauer gesagt einem Cloud-Server 16 verbunden.

Die Anordnung 1 umfasst auch eine Erfassungseinrichtung 15, bei der es sich in dem gezeigten Beispiel um einen Kamerasensor handelt. Dieser ist derart im Fahrzeug 10 angeordnet, dass er einen vorausliegenden Straßenabschnitt erfasst und nach Maßgabe einer Erfassungsfrequenz Bilddaten der Straße ausgibt. Diese Bilddaten können in dem Kamerasensor selbst oder aber von der Steuereinrichtung 14 ausgewertet werden, und zwar derart, dass darin vorbestimmte Umgebungseigenschaften ermittelt werden.

Bei diesen Umgebungseigenschaften handelt es sich um eine aus Sicht des Fahrzeugs und in Fahrtrichtung F betrachtete linke Fahrbahnbegrenzung LF und rechte Fahrbahnbegrenzung RF. Dabei wird in dem gezeigten Fall eine Fahrbahn mit einer einzelnen Fahrspur für das Fahrzeug 10 gleichgesetzt. Bei der linken Fahrbahnbegrenzung LF handelt es sich um einen Mittelstreifen und bei der rechten Fahrbahnbegrenzung RF handelt es sich um einen Seitenstreifen. Die rechte Fahrbahnbegrenzung RF kann auch durch einen Übergangsbereich der Straße 12 zur Umgebung bzw. Natur markiert sein.

Die Steuereinrichtung 14 ist auch dazu eingerichtet, eine aktuelle Fahrzeugposition zu ermitteln, z.B. anhand von GPS-Daten oder anderweitigen Positionserfassungsdaten. Die Umgebungseigenschaften LF, RF können entsprechend ortsbasiert bzw. ortsabhängig gespeichert werden. Dies kann in einer nicht dargestellten Speichereinrichtung der Steuereinrichtung 14 erfolgen.

Allgemein ist darauf hinzuweisen, dass die Steuereinrichtung 14 wenigstens eine Prozessoreinrichtung umfassen kann, insbesondere einen Computerprozessor. Dieser kann Programmanweisungen ausführen, die z.B. in einer ebenfalls nicht dargestellten Speichereinrichtung der Steuereinrichtung 14 hinterlegt sind. Durch Ausführen dieser Programmanweisungen kann die Steuereinrichtung veranlasst werden, sämtliche hierin geschilderten Funktionen und/oder Schritte und/oder Maßnahmen durchzuführen oder zu veranlassen.

Im Rahmen dieser Offenbarung ist es allgemein und nicht beschränkt auf weitere Details der Ausführungsbeispiele möglich, Positionsinformationen, insbesondere in Querrichtung, der ermittelten Umgebungseigenschaften und insbesondere der Fahrbahnbegrenzungen LF, RF in einem absoluten und/oder fahrzeugexternen Koordinatensystem zu ermitteln und zu speichern. Hierfür kann z.B. auf GPS-Koordinaten oder andere globale Koordinaten zurückgegriffen werden. Es können also bevorzugt für jeden Fahrzeugort, prinzipiell aber auch unabhängig hiervon, Koordinaten der erfassten Fahrbahnbegrenzungen LF, RF in einem absoluten (z. B. globalen) Koordinatensystem ermittelt und gespeichert werden.

Ebenso gezeigt ist eine Route R, die das Fahrzeug im abgebildeten Zustand noch zurücklegen wird. Die Route R kann anhand der tatsächlichen Fahrzeugpositionen des Fahrzeugs ermittelt werden, die vorliegen, wenn das Fahrzeug 10 entlang der Straße 12 fährt.

Die gezeigte Lösung setzt voraus, dass entlang der Straße 12 in der Vergangenheit bereits mehrere andere Fahrzeuge entlang einer vergleichbaren Route R gefahren sind und dabei auch dieselben Umgebungseigenschaften LF, RF erfasst haben. Weiter wird vorausgesetzt, dass diese Fahrzeuge die entsprechenden Umgebungsdaten an die fahrzeugexterne Speichereinrichtung 16 übermittelt haben. Dort können diese Umgebungsdaten, wie vorstehend allgemein erläutert, z.B. ortsabhängig gespeichert werden. Es können auch die tatsächlich zurückgelegten Fahrrouten R der jeweiligen Fahrzeuge gespeichert werden.

Fährt das aktuell betrachtete Fahrzeug 10 entlang der Straße 12, können dann die jeweils von der Erfassungseinrichtung 16 bzw. Steuereinrichtung 14 aktuell erfassten Umgebungsdaten ermittelt werden. Ebenso können aber aus der Speichereinrichtung 16 die gespeicherten Umgebungsdaten derjenigen Fahrzeuge ermittelt werden, die vormals bereits die Straße 12 in diesem Bereich (d.h. in demselben Streckenabschnitt) befahren haben. Relevante Umgebungsdaten können dabei z.B. anhand der zurückgelegten Routen R und/oder einer Fahrzeugposition ermittelt werden, die mit der Position und Route R des aktuell die Straße 12 befahrenden Fahrzeugs 10 möglichst übereinstimmen sollten.

Anschließend werden die gespeicherten Umgebungsdaten mit den aktuell erfassten Umgebungsdaten verglichen. Konkret wird jede der betrachteten Umgebungseigenschaften LF, RF individuell mit den entsprechenden gespeicherten Umgebungseigenschaften verglichen. Wird dabei festgestellt, dass die gespeicherten Umgebungsdaten und genauer gesagt Umgebungseigenschaften nicht den aktuell erfassten entsprechen, was von der Steuereinrichtung 14 durch Durchführen entsprechender Vergleichs- und Bewertungsschritte festgestellt werden kann, können die gespeicherten Umgebungsdaten als nicht plausibel bewertet werden. Für die Querführung können dann stattdessen die aktuell erfassten Umgebungsdaten verwendet werden und bevorzugt ausschließlich diese erfassten Umgebungsdaten. Wird hingegen eine Plausibilität festgestellt, können die gespeicherten Umgebungsdaten für die Querführung verwendet werden und bevorzugt ausschließlich diese gespeicherten Umgebungsdaten.

In Fig. 2 wird dieses Vorgehen anhand eines Ablaufschemas noch einmal gesondert erläutert. In einem Schritt S0, der fortlaufend durchgeführt werden kann und optionaler Bestandteil des erfindungsgemäßen Verfahrens ist, wird eine Vielzahl von mit Fahrzeugen einer (Schwarm-) Population oder Flotte erfasster Umgebungsdaten ortsabhängig in der fahrzeugexternen Speichereinrichtung 16 gespeichert. In einem Schritt S1 wird dann eine Straße 12 mit einem spezifischen Fahrzeug 10 befahren. Dabei erfasst dieses Fahrzeug 10 fortlaufend ebenfalls Umgebungsdaten und insbesondere dieselben Umgebungseigenschaften LF, RF, die auch bereits die Fahrzeuge erfasst haben, deren Umgebungsdaten in der fahrzeugexternen Speichereinrichtung 16 gespeichert wurden.

In einem Schritt S2 werden die gespeicherten Umgebungsdaten in Abhängigkeit eines aktuellen Orts des Fahrzeugs 10 von der Steuereinrichtung 14 ausgelesen bzw. angefordert. Anschließend können wenigstens eine oder auch beliebige Kombinationen der nachstehend erläuterten Plausibilisierungsmaßnahmen durchgeführt werden.

Zunächst kann optional ermittelt werden, ob eine Route R derjenigen Fahrzeuge, die die entsprechenden gespeicherten Umgebungsdaten erzeugt haben, mit einer vorausliegenden Route R des aktuell betrachteten Fahrzeugs 10 übereinstimmen. Hierfür können Informationen zur Route R während des Erfassens der gespeicherten Umgebungsdaten als Bestandteil dieser gespeicherten Umgebungsdaten gespeichert und von der Steuereinrichtung 14 ermittelt werden. Eine aktuelle Route R kann z.B. anhand bekannter Bildauswertealgorithmen ermittelt werden, insbesondere als Mittellinie zwischen der linken und rechten Fahrbahnbegrenzung LF, RF. Der Vergleich einer vorausliegenden Route R laut gespeicherten Umgebungsdaten (oder auch Schwarmdaten) und erfasster vorausliegender Route R wird in Fig. 2 im Schritt S2a durchgeführt. Bei Feststellen einer ausreichenden Übereinstimmung können die Umgebungsdaten als plausibel bewertet werden. Eine Übereinstimmung kann z.B. eine Abweichung in der horizontalen Ebene und/oder in Ortskoordinaten der entsprechenden Routen R ausgedrückt werden bzw. anhand von diesen ermittelt werden.

Zusätzlich oder alternativ können in einem Schritt S2b die jeweils ermittelten Umgebungseigenschaften LF, RF mit den aktuell erfassten Umgebungseigenschaften LF, RF verglichen werden. Hierfür kann beispielsweise über eine gewisse Fahrstrecke ein Koordinatenwert der linken Fahrbahnbegrenzung LF, wie durch die Erfassungseinrichtung 16 erfasst, aufgezeichnet werden. Weiter kann für denselben Streckenabschnitt der Koordinatenwert dieser Fahrbahnbegrenzung LF aus den gespeicherten Umgebungsdaten ermittelt werden. Bildlich gesprochen können auf diese Weise zwei Grafen erzeugt werden und kann eine Korrelation und/oder ein Abstand zwischen diesen Grafen bewertet werden.

Beispielsweise können mathematische Vergleichsverfahren, wie eine Methode der einzelnen Fehlerquadrate oder eine allgemeine Korrelationsbestimmung, angewandt werden, um eine Übereinstimmung (bzw. Abweichung) zwischen den gespeicherten und den erfassten Umgebungsdaten und bevorzugt für jede individuelle Umgebungseigenschaft zu ermitteln. Als Resultat kann eine Güte G der gespeicherten Umgebungsdaten ermittelt werden, wobei die Güte umso höher ist, desto geringer die Abweichung und/oder desto größer die Übereinstimmung zu den tatsächlich erfassten Umgebungsdaten bzw. Umgebungseigenschaften ist.

In Schritt S3 kann dann diese Güte G verwendet werden, um die tatsächliche Plausibilisierung vorzunehmen.

Hierfür wird bevorzugt zunächst eine zu erfüllende Mindestgüte M ermittelt, was zu einem beliebigen Zeitpunkt und z. B auch vor dem Schritt S2b durchführbar ist. Die Mindestgüte M ermöglicht in der vorstehend allgemein erläuterten Weise, dass in Abhängigkeit verschiedener Umstände festgelegt wird, welche Güte G für das aktuelle Fahrszenario und/oder die allgemeine Betriebssituation realistisch erwartet werden kann. Wenn für den betrachteten Ort oder allgemein die betrachtete Betriebssituation keine hohe Genauigkeit für das Erfassen von Umgebungsdaten erwartet werden kann, kann die zu erfüllende Mindestgüte M entsprechend gering gewählt werden. Ist Gegenteiliges der Fall, kann die zu erfüllende Mindestgüte M entsprechend hoch ausfallen.

Im Schritt S4 wird dann festgestellt, ob in dem Schritt S3 ein Vergleich der ermittelten Güte und der zu erfüllenden Mindestgüte M oder aber im Schritt S2a der Vergleich der Route R ergeben hat, dass die gespeicherten Umgebungsdaten plausibel sind.

Ist dies nicht der Fall, wird im Schritt S4 festgelegt, dass das Durchführen der Querführung des Fahrzeugs mit der Steuereinrichtung 14 auf Basis der vom Fahrzeug 10 selbst erfassten Umgebungsdaten erfolgen soll. Wurden die gespeicherten Umgebungsdaten hingegen als plausibel bewertet, erfolgt die Querführung unter Berücksichtigung dieser gespeicherten Umgebungsdaten und bevorzugt ausschließlich auf Basis dieser gespeicherten Umgebungsdaten und nicht der aktuell erfassten.

### Bezugszeichenliste

- 1: Anordnung
- 10: Fahrzeug
- 12: Straße
- 14: Steuereinrichtung
- 15: Erfassungseinrichtung
- 16: fahrzeugexterne Speichereinrichtung
- F: Fahrtrichtung
- LF: linke Fahrbahnbegrenzung
- RF: rechte Fahrbahnbegrenzung
- G: Güte
- M: Mindestgüte
- R: Route

## Patentansprüche

1. Verfahren zur Querführung eines Fahrzeugs (10), mit:
- Erfassen von Umgebungsdaten des Fahrzeugs (10) mittels Erfassungssensoren beim Befahren einer Strecke,
- Erhalten von gespeicherten Umgebungsdaten, die von einer Mehrzahl von anderen Fahrzeugen (10), die die Strecke aktuell nicht befahren, beim Befahren der Strecke erfasst wurden;
- Plausibilisieren der gespeicherten Umgebungsdaten anhand der erfassten Umgebungsdaten;
- Durchführen einer Querführung des Fahrzeugs (10) basierend auf den plausibilisierten gespeicherten Umgebungsdaten, **dadurch gekennzeichnet, dass** wenn das Plausibilisieren misslingt, die vom Fahrzeug (10) erfassten Umgebungsdaten als Umgebungsdaten für die Querführung berücksichtigt werden.

2. Verfahren nach Anspruch 1, **dadurch gekennzeichnet, dass** die gespeicherten Umgebungsdaten Schwarmdaten sind.

3. Verfahren nach einem der vorangehenden Ansprüche, **dadurch gekennzeichnet, dass** die Umgebungsdaten unterschiedliche Umgebungseigenschaften betreffen und für jede Umgebungseigenschaft eine eigenständige Plausibilisierung durchgeführt wird.

4. Verfahren nach einem der vorangehenden Ansprüche, **dadurch gekennzeichnet, dass** mit den Umgebungsdaten wenigstens eine der folgenden Umgebungseigenschaften erfasst wird:
- eine aus Sicht des Fahrzeugs linke Fahrbahnmarkierung (LF) oder Fahrbahnbegrenzung;
- eine aus Sicht des Fahrzeugs rechte Fahrbahnmarkierung (RF) oder Fahrbahnbegrenzung;
- wenigstens eine äußere Fahrbahnkante.

5. Verfahren nach einem der vorangehenden Ansprüche, **dadurch gekennzeichnet, dass** auch Informationen über eine von den weiteren Fahrzeugen gefahrene Route (R) gespeichert werden und diese Informationen zwecks Plausibilisieren der gespeicherten Umgebungsdaten mit vom Fahrzeug (10) erfassten Umgebungsdaten verwendet werden.

6. Verfahren nach einem der vorangehenden Ansprüche, **dadurch gekennzeichnet, dass** für das Plausibilisieren eine Güte (G) der gespeicherten Umgebungsdaten anhand der erfassten Umgebungsdaten ermittelt wird,
insbesondere wobei die Güte (G) anhand eines Vergleichs aus den gespeicherten Umgebungsdaten und den erfassten Umgebungsdaten entlang eines definierten Streckenabschnitts ermittelt wird.

7. Verfahren nach Anspruch 6, **dadurch gekennzeichnet, dass** eine Mindestgüte (M) ermittelt wird, die die gespeicherten Umgebungsdaten erfüllen müssen, damit sie plausibilisiert werden.

8. Verfahren nach einem der Ansprüche 6 oder 7, **dadurch gekennzeichnet, dass** die Mindestgüte (M) in Abhängigkeit von wenigstens einem der folgenden ermittelt wird:
- eine dem Fahrzeug (10) vorausliegende Streckenabschnittslänge, innerhalb derer erfasste Umgebungsdaten mit gespeicherten Umgebungsdaten verglichen werden;
- eine Art der Umgebungseigenschaft, die als Umgebungsdaten erfasst und verglichen werden;
- Erfassungsbedingungen während dem Erfassen der Umgebungsdaten;
- eine Region, innerhalb derer sich das Fahrzeug (10) befindet;
- einer Eigenschaft des zur Güteermittlung durchgeführten Vergleichs;
- einer historischen Güte der gespeicherten Umgebungsdaten.

9. Anordnung (1) zum Querführen eines Fahrzeugs (10), mit:
einer Erfassungseinrichtung (15) zum Erfassen von Umgebungsdaten des Fahrzeugs (10) und einer Steuereinrichtung (14), die dazu eingerichtet ist:
- gespeicherte Umgebungsdaten, die von einer Mehrzahl von anderen Fahrzeugen (10) beim Befahren einer Strecke erfasst wurden, anhand der erfassten Umgebungsdaten der Erfassungseinrichtung (15) zu plausibilisieren;
- eine Querführung des Fahrzeugs (10) basierend auf den plausibilisierten gespeicherten Umgebungsdaten durchzuführen,
**dadurch gekennzeichnet, dass** die Steuereinrichtung dazu eingerichtet ist, wenn die Plausibilisierung misslingt, eine Querführung des Fahrzeugs (10) basierend auf den von der Erfassungseinrichtung (15) erfassten Umgebungsdaten durchzuführen.

## Claims

1. A method for laterally controlling a vehicle (10), the method comprising:
- capturing environment data of the vehicle (10) by means of detection sensors while driving a route,
- receiving stored environment data that was captured, while driving the route, by a plurality of other vehicles (10) that are not currently driving the route;
- checking the plausibility of the stored environment data with the aid of the captured environment data;
- executing a lateral control of the vehicle (10) based on the plausibility-checked stored environment data, **characterized in that** if the plausibility check is failed, the environment data captured by the vehicle (10) will be taken into account as environment data for executing the lateral control.

2. The method according to claim 1, **characterized in that** the stored environment data are swarm data.

3. The method according to either of the preceding claims, **characterized in that** the environment data relates to different environment properties, and a dedicated plausibility check is carried out for each environment property.

4. The method according to any of the preceding claims,
**characterized in that** at least one of the following environment properties is captured with the environment data:
- a left-hand lane marking (LF) or lane boundary, as seen from the vehicle;
- a right-hand lane marking (RF) or lane boundary, as seen from the vehicle;
- at least one outer lane edge.

5. The method according to any of the preceding claims, **characterized in that** items of information about a route (R) traveled by the other vehicles are also stored and these items of information are used to check the plausibility of the stored environment data against environment data captured by the vehicle (10).

6. The method according to any of the preceding claims,
**characterized in that** for the plausibility check, a quality (G) of the stored environment data are ascertained with the aid of the captured environment data,
in particular wherein the quality (G) is ascertained with the aid of a comparison between the stored environment data and the captured environment data along a defined route section.

7. The method according to claim 6, **characterized in that** a minimum quality (M) is determined which the stored environment data must meet to pass the plausibility check.

8. The method according to either of claims 6 or 7, **characterized in that** the minimum quality (M) is determined as a function of at least one of the following:
- a route section length ahead of the vehicle (10), within which captured environment data are compared to stored environment data;
- a type of environmental property which is captured and compared as environment data;
- acquisition conditions during the capture of the environment data;
- a region within which the vehicle (10) is located;
- a property of the comparison carried out for ascertaining the quality;
- a historical quality of the stored environment data.

9. A system (1) for laterally controlling a vehicle (10), comprising:
a detection device (15) for capturing environment data of the vehicle (10) and a control device (14) which is configured to:
- check the plausibility of the stored environment data captured by a plurality of further vehicles (10) while traveling on a route, with the aid of the captured environment data of the detection device (15);
- execute a lateral control of the vehicle (10) based on the plausibility-checked stored environment data, **characterized in that** the control device is configured to execute a lateral control of the vehicle (10) based on the environment data captured by the detection device (15) if the plausibility check is failed.

## Revendications

1. Procédé pour le guidage transversal d'un véhicule (10), comportant :
- la détection de données d'environnement du véhicule (10) au moyen de capteurs de détection lors du passage sur une route,
- l'obtention de données d'environnement mémorisées qui ont été détectées lors du passage sur la route par une pluralité d'autres véhicules (10) qui ne passent pas actuellement sur la route ;
- le contrôle de la plausibilité des données d'environnement mémorisées à l'aide des données d'environnement détectées ;
- l'exécution d'un guidage transversal du véhicule (10) sur la base des données d'environnement mémorisées et rendues plausibles,
**caractérisé en ce que** si le contrôle de la plausibilité échoue, les données d'environnement détectées par le véhicule (10) sont prises en compte comme données d'environnement pour le guidage transversal.

2. Procédé selon la revendication 1, **caractérisé en ce que** les données d'environnement mémorisées sont des données d'essaim.

3. Procédé selon l'une des revendications précédentes,
**caractérisé en ce que** les données d'environnement concernent différentes propriétés d'environnement et un contrôle de la plausibilité autonome est exécuté pour chaque propriété d'environnement.

4. Procédé selon l'une des revendications précédentes,
**caractérisé en ce qu'**avec les données d'environnement, au moins l'une des caractéristiques d'environnement suivantes est détectée :
- un marquage au sol (LF) ou une délimitation de la chaussée à gauche du point de vue du véhicule ;
- un marquage au sol (RF) ou une délimitation de la chaussée à droite du point de vue du véhicule ;
- au moins un bord extérieur de la chaussée.

5. Procédé selon l'une des revendications précédentes,
**caractérisé en ce que** des informations concernant un itinéraire (R) suivi par les autres véhicules sont également mémorisées et lesdites informations sont utilisées dans le but de contrôler la plausibilité des données d'environnement mémorisées avec des données d'environnement détectées par le véhicule (10).

6. Procédé selon l'une des revendications précédentes,
**caractérisé en ce que,** pour le contrôle de la plausibilité, une qualité (G) des données d'environnement mémorisées est déterminée à l'aide des données d'environnement détectées,
en particulier dans lequel la qualité (G) est déterminée à l'aide d'une comparaison entre les données d'environnement mémorisées et les données d'environnement détectées le long d'une section de route définie.

7. Procédé selon la revendication 6, **caractérisé en ce qu'**une qualité minimale (M) que les données d'environnement mémorisées doivent satisfaire pour être rendues plausibles est déterminée.

8. Procédé selon l'une des revendications 6 ou 7, **caractérisé en ce que** la qualité minimale (M) est déterminée en fonction d'au moins l'un des éléments suivants :
- une longueur de section de route précédant le véhicule (10), à l'intérieur de laquelle des données d'environnement détectées sont comparées avec des données d'environnement mémorisées ;
- un type de propriété d'environnement qui est détecté et comparé en tant que données d'environnement ;
- des conditions de détection pendant la détection des données d'environnement ;
- une région à l'intérieur de laquelle se trouve le véhicule (10) ;
- une propriété de la comparaison exécutée pour la détermination de la qualité ;
- une qualité historique des données d'environnement mémorisées.

9. Agencement (1) pour le guidage transversal d'un véhicule (10), comportant :
un dispositif de détection (15) pour la détection de données d'environnement du véhicule (10) et un dispositif de commande (14) qui est configuré pour :
- contrôler la plausibilité de données d'environnement mémorisées qui ont été détectées par une pluralité d'autres véhicules (10) lors du passage sur une route, à l'aide des données d'environnement détectées du dispositif de détection (15) ;
- exécuter un guidage transversal du véhicule (10) sur la base des données d'environnement mémorisées et rendues plausibles, **caractérisé en ce que** le dispositif de commande est configuré pour, si le contrôle de la plausibilité échoue, exécuter un guidage transversal du véhicule (10) sur la base des données d'environnement détectées par le dispositif de détection (15).
